# EUROPEAN PATENT SPECIFICATION

(11) **EP 1 433 386 B1**
(45) Date of publication and mention of the grant of the patent: **04.10.2006**
(21) Application number: 03029537.2
(22) Date of filing: 22.12.2003
(51) Int. Cl.: A23G 3/00, A21D 13/08

(54) **Food product formed from at least two shell halves of wafer sheet**
Lebensmittel bestehend aus mindestens zwei Waffel-Hohlraumkörperhälften
Produit alimentaire comprenant au moins deux demi-coquilles consistant de gaufrette

(30) Priority: 23.12.2002 EP 02425792
(43) Date of publication of application: 30.06.2004
(73) Proprietor: SOREMARTEC S.A., 6700 Schoppach-Arlon (BE); Ferrero S.p.A., 12051 Alba (Cuneo) (IT); FERRERO OFFENE HANDELSGESELLSCHAFT m.b.H., 35260 Stadtallendorf (DE)
(72) Inventor: Mansuino, Sergio, 12084 Mondovi (Cuneo) (IT)
(74) Representative: Rambelli, Paolo

(56) References cited:
- EP-A- 0 086 319
- EP-A- 0 614 614
- EP-A- 1 110 459
- EP-A- 1 258 194
- US-A- 4 430 351
- PERUCCA E.: 'Dizionario d'ingegneria', UNIONE TIPOGRAFICO EDITRICE TORINESE pages 945 - 946 * the whole document *

## Description

The present invention relates to a food product comprising at least two shell halves of wafer sheet joined together rim to rim along annular mating surfaces forming the rim outline, and typically comprising a filling placed inside the cavity formed by the two joined shell halves.

Food products of the type cited above are widely known, particularly in the field of sweets and confectionery; the shells may be of various sizes, depending on the product, and various shapes, for example spherical, ovoid, bar-shaped or double pyramid-shaped, and may have one or more cavities capable of containing a filling.

As described in EP-A-0 054 229 and WO97/48282, a known method for industrial preparation of the shell halves comprises the preparation of a wafer sheet, having a plurality of shell halves interconnected by a continuous wall, normally flat.

This intermediate wafer sheet is obtained by baking the wafer mixture in a mould, comprising a female half-mould and a male half-mould which between them, when placed together, form a space or cavity corresponding to the intermediate wafer sheet.

According to a first known technique, the shell halves are separated from the interconnecting wall by punching through this wall, along the entire perimeter of the rim of each of the shell halves, using a plurality of steel punches corresponding in size and shape to the rims of the shell halves.

In general, the mating surfaces between complementary shell halves intended to be joined together rim to rim are annular surfaces lying in a plane which in the case of spherically shaped products is generally an equatorial plane.

According to another known technique described for example in EP-A-054 229 and EP-A-0 221 033, the wafer shell halves are cut from the intermediate sheet along a plane parallel to the interconnecting wall. In this case, the mating surfaces between the shell halves are annular surfaces lying in the cutting plane.

For the preparation of filled products, a first series of shell halves, cut from the intermediate sheet according to one of the techniques cited above, is arranged in a matrix pattern in corresponding cavities in a mould plate. A second series of shell halves complementary to the first is arranged in a matrix pattern in complementary cavities in a second mould plate provided with cavities to take the shell halves arranged in a position such that the shell halves of the first and second moulds can be made to register with each other.

The shell halves are then filled with the respective filling products and the two plate moulds are closed like the pages of a book so as to bring the mating surfaces of the shell halves to a position where they fit together and register correctly. Typically, the moulds are cooled to a temperature below ambient temperature, or to a temperature such that the filling product acts as a cementing agent to keep the two joined shell halves connected to each other and correctly registered.

However, in the case of fluid filling products, particularly those of liquid or creamy consistency, the cooling of the moulds may not be sufficient to achieve a viscosity having cementing characteristics. For this reason, it may be necessary before closing the moulds to apply an auxiliary cementing material to the mating surfaces of the shell halves, applying this in dots or a continuous strip suitable for keeping the two shell halves connected to each other.

EP-A-0 614 614, EP-A-1 110 459, US-A-4 430 351 and EP-A-0 086 319 describe confectionery products including two shell halves which are joined together by means of a cementing or adhesive material applied to their mating surfaces.

The purpose of the present invention is to provide a new structure and form of the complementary shell halves which makes it easier to keep the two shell halves correctly registered after they are joined together, even where there are fluid filling products, in particular of liquid or creamy consistency, which are not in themselves capable of acting as cementing materials, and avoids the need to use auxiliary edible cementing products deposited on the mating surfaces.

The above-mentioned purpose is achieved by means of a food product, of the type defined in the introduction to this description, characterised in that the annular mating surfaces of each of the two shell halves have locating means which are complementary with each other as defined in the appended claims. Other characteristics and advantages of the product according to the invention will become clear from the following detailed description given with reference to the appended drawings provided purely by way of non-limiting example, and in which:,
- figures 1-4 are views, partly in cross-section, of food products according to the invention;
- figures 5-8 are views in section showing the pairs of wafer sheets with interconnected shell halves, from which the products shown respectively in figures 1-4 can be obtained; and
- figure 9 is a view in section of a pair of shell halves according to another form of embodiment of the invention.

In the appended drawings, the forms of embodiment of the invention shown relate to products of spherical or spheroidal shape, but it should be understood that the invention lends itself to the production of products of any shape or size whatsoever.

A product according to the invention is formed by two shell halves, indicated respectively by the numbers 2 and 4, which in the examples shown are each hemispherical in shape. However, the term "shell half"as used in the present description should not be understood as limited to shell halves of hemispherical shape or to shell halves having a greater or lesser degree of concavity, but should be understood as including shell halves of any shape whatsoever, including a flattened shape. It should thus be clearly understood that the scope of the invention includes the case where the food product is formed by a concave shell half of the type shown in the drawings, combined with a flattened shell half functioning as a lid joined to the other shell half along an annular peripheral area provided with the locating means characterising the invention.

The two shell halves are joined together along annular surfaces which fit together, indicated respectively by the numbers 6 and 8.

The term "annular surface" is intended simply to indicate a surface closed upon itself and is not to be taken as limited to circular surfaces, polygonal surfaces or surfaces of any shape being naturally included.

In particular, according to the invention the above-mentioned mating surfaces are surfaces not lying in a single plane, being configured so as to have locating means enabling the two shell halves to be joined together and be correctly registered.

Said locating means may be obtained by means of mating surfaces having, for example, a tooth-shaped, zigzag, L-shaped, hook-shaped or V-shaped cross-section (a section taken at right angles to the general plane of the rim), and/or a cross-section inclined relative to the vertical.

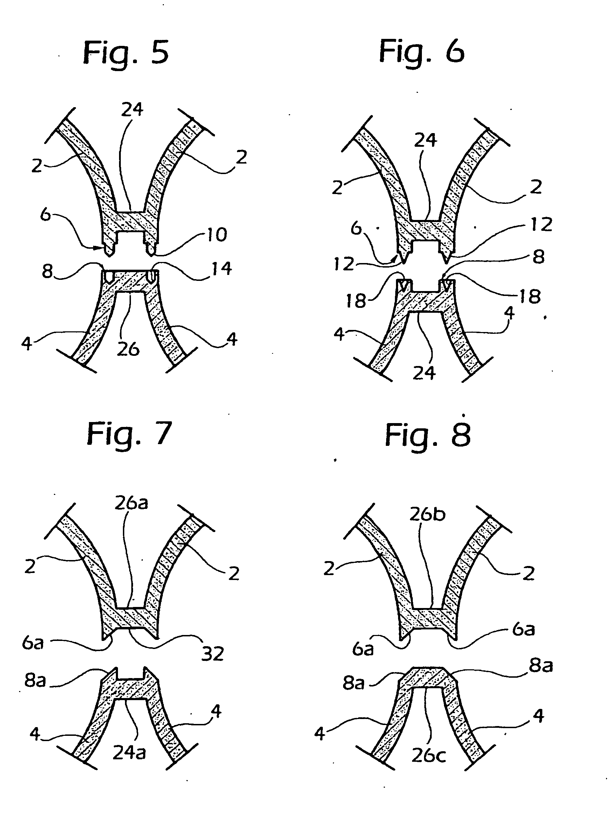

Thus in figures 5 and 6, for example, the locating means are formed by projecting formations, tooth-shaped (or U-shaped) 10 or V-shaped 12, in the mating surface 6 of the shell half 2, capable of engaging with complementary cavities 14 and 18 made in the annular mating surface of the other shell half 4.

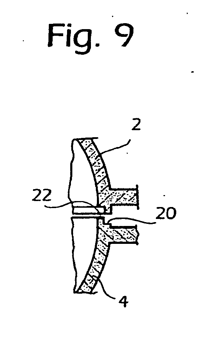

In the example in figure 9, said locating means have a step-shaped cross-section with two annular surfaces 20 and 22 lying in respective staggered planes.

In another form of embodiment shown in figures 7 and 8, the locating means are defined by the mating surfaces 6a, 8a themselves, which have an inclined cross-section, so that the mating surfaces are tapering surfaces, for example truncated cone-shaped or truncated pyramid-shaped, depending on the rim perimeter adopted in each case.

As indicated previously, the shell halves forming the food product are generally obtained from a sheet of wafer having a plurality of shell halves interconnected by a continuous interconnecting wall 24, 26, generally flat, which surrounds the rim outline or by several interconnecting walls which extend from separate parts of the rim outline or from the side wall containing the shell halves.

The shell halves are separated from the interconnecting wall or walls by punching carried out through this interconnecting wall or walls along the rim outline of one of the shell halves, for example using a plurality of steel punches corresponding in size and shape to the rims of the shell halves.

In the case where the shell halves have straight rim edges, they may be separated by a sawing operation, in which the saw extends perpendicularly to the plane of the wafer sheet.

In a preferred form of embodiment, the shell halves are obtained from wafer sheets with interconnected shells, in which the interconnecting wall (or walls) is connected to the shell halves in a staggered (recessed) position relative to the mating surfaces 6 and 8. A recessed interconnecting wall of this kind is indicated by the number 24 in figures 5 and 6.

In this way it can be ensured that the operation of separating the shell halves by punching does not interfere with or damage the mating surfaces. These surfaces, obtained by moulding and subsequent baking on the plates of the oven, have a smooth or polished finish, free from open macropores. This is due to the wafer mixture (previously poured onto the lower plate) being baked in the plates of the oven placed together, cooking in contact with the polished surface of the baking plates (upper and lower).

The presence of the above-mentioned degree of surface finish on the mating surfaces and on the surfaces of the locating means improves sealing and the keeping characteristics of the food product when filled with filling products of liquid, creamy or pasty consistency.

In the case where the interconnecting wall 24 is lowered or staggered relative to the annular mating surfaces 6 and 8, following the separation operation, the shell halves thus obtained have on their side wall or walls, in a lowered position relative to the mating surfaces, a continuous or discontinuous area of cutting 30 around the perimeter, with a rough surface, possibly crumbling in places and with open pores, while the annular mating surfaces keep the high quality surface finish obtained as a result of moulding and subsequent baking.

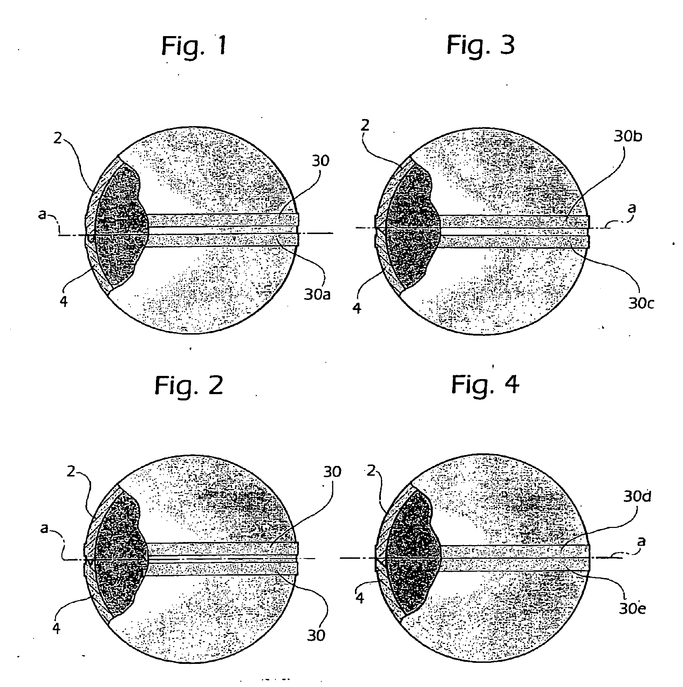

Figure 2 illustrates the above-mentioned areas of cutting 30, at a distance from the equatorial plane a-a of the product, resulting from separation of the shell halves shown in figure 6.

Although the solution described above is generally preferred, this solution should not be understood as essential, since there is always the possibility of a case where the interconnecting wall between the shell halves has an upper surface flush or coplanar with a portion of the mating surface, as indicated for example by the reference number 26 in figure 5.

Figure 1 shows the product obtained from the interconnected shell halves in figure 5, where the area of cutting 30a, obtained as a result of cutting the interconnecting wall 26, is adjacent to the general plane of the rim of the two shell halves which, in example shown, coincides with the equatorial plane of the product.

Similarly, figures 3 and 4 illustrate the products obtained from the interconnected shell halves in figures 7 and 8 respectively, the resulting areas of cutting being indicated as 30b, 30c, 30d and 30e.

In the example in figure 7, the interconnecting wall 24a between the shell halves 4 is lowered relative to the ends of the rim outline, because of which the corresponding area of cutting 30c (figure 3) does not interfere with the mating surfaces 8a. Still in figure 7, the interconnecting wall 26a between the shell halves 2 has a surface 32 adjacent or directly connected to the annular mating surface 6a.

A similar situation is found in the case of the interconnected shells in figure 8, where the interconnecting walls between the shell halves are indicated respectively as 26c and 26b.

## Claims

1. A food product comprising at least two shell halves (2, 4) of wafer sheet, joined to each other rim to rim along annular mating surfaces (6, 8) forming the rim outline, **characterised in that** the annular mating surfaces (6, 8) of each of the two shell halves (2, 4) have locating means (10, 14; 12, 18; 6a, 8a) complementary with each other, wherein said locating means comprise formations (10, 14; 12, 18) shaped so that they can engage with each other, or comprise tapering annular mating surfaces (6a, 8a).

2. A food product according to claim 1, **characterised in that** said locating means comprise annular mating surfaces (6, 8) having a tooth-shaped, U-shaped, V-shaped, L-shaped, hook-shaped or zigzag cross-section.

3. A food product according to claim 1, **characterised in that** said tapering mating surfaces (6a, 8a) are truncated cone-shaped or truncated pyramid-shaped surfaces.

4. A food product according to any one of claims 1 to 3, **characterised in that** said mating surfaces (6, 8) have a substantially smooth surface finish free from open macropores.

5. A food product according to any one of the preceding claims, **characterised in that** at least one of said shell halves (2, 4) has a wall having a continuous or discontinuous porous area (30) extending around the perimeter, lowered relative to said annular mating surfaces (6, 8) or relative to the ends of the rim outline.

6. A food product according to claim 5, **characterised in that** said porous area (30) is the surface resulting from the cutting of one or more radial walls (24, 24a) connected to the side wall of the half shell in a lowered position relative to said annular mating surfaces (6, 8) or relative to the ends of the rim outline.

7. A food product according to claim 6, **characterised in that** at least one of the two shell halves (2, 4) is obtained by cutting from an intermediate wafer sheet comprising a plurality of shell halves connected to each other by at least one interconnecting wall (24, 26) extending from the side wall of each shell half (2, 4) and connected to the shell halves in a lowered position relative to the annular mating surface.

8. A food product according to any one of claims 1 to 4, **characterised in that** at least one of said shell halves are obtainable by cutting from an intermediate wafer sheet comprising a plurality of shell halves connected to each other by at least one interconnecting wall (26, 26a) having a surface flush with or adjacent to said mating surfaces (6a, 8a), the cutting being carried out at right angles to the plane of the interconnecting wall.

9. A food product according to anyone of the preceding claims, comprising a filling of liquid, creamy or pasty consistency.

10. A wafer sheet comprising a plurality of shell halves (2, 4) interconnected by least one interconnecting wall (24, 26), **characterised in that** said shell halves have annular rim surfaces provided with locating means (10, 14; 12, 18; 6a, 8a) capable of complementary mating with complementary shell halves, wherein said locating means comprise formations (10, 14; 12, 18) shaped so that they can engage with each other or comprise tapering annular mating surfaces (6a, 8a).

## Patentansprüche

1. Lebensmittelprodukt, umfassend mindestens zwei Halbschalen (2, 4) aus Waffel, die miteinander Rand-an-Rand entlang ringförmiger Verbindungsflächen (6, 8) verbunden sind, die den Randumriss bilden, **dadurch gekennzeichnet, dass** die ringförmigen Verbindungsflächen (6, 8) jeder der beiden Halbschalen (2, 4) Lokalisierungsmittel (10, 14; 12, 18; 6a, 8a) aufweisen, die komplementär zueinander sind, wobei die Lokalisierungsmittel Gebilde (10, 14; 12, 18) umfassen, die so geformt sind, dass sie miteinander eingreifen können, oder sich verjüngende ringförmige Verbindungsflächen (6a, 8a) umfassen.

2. Lebensmittelprodukt nach Anspruch 1, **dadurch gekennzeichnet, dass** die Lokalisierungsmittel ringförmige Verbindungsflächen (6, 8) umfassen, die einen zahnförmigen, U-förmigen, V-förmigen, L-förmigen, hakenförmigen oder zick-zack-förmigen Querschnitt aufweisen.

3. Lebensmittelprodukt nach Anspruch 1, **dadurch gekennzeichnet, dass** die sich verjüngenden Verbindungsflächen (6a, 8a) kegelstumpfförmige oder pyramidenstumpfförmige Oberflächen sind.

4. Lebensmittelprodukt nach einem der Ansprüche 1 bis 3, **dadurch gekennzeichnet, dass** die Verbindungsflächen (6, 8) eine im Wesentlichen glatte Oberflächenbeschaffenheit aufweisen, die frei von offenen Makroporen ist.

5. Lebensmittelprodukt nach einem der vorangehenden Ansprüche, **dadurch gekennzeichnet, dass** mindestens eine der Halbschalen (2, 4) eine Wand mit einem durchgehenden oder unterbrochenen porösen Bereich (30) aufweist, der sich um den Rand herum erstreckt und in Bezug auf die ringförmigen Verbindungsflächen (6, 8) oder in Bezug auf die Enden des Randumrisses abgesenkt ist.

6. Lebensmittelprodukt nach Anspruch 5, **dadurch gekennzeichnet, dass** der poröse Bereich (30) die Oberfläche ist, die aus dem Schneiden von einer oder mehreren radialen Wänden (24, 24a) resultiert, die mit der Seitenwand der Halbschale in einer abgesenkten Position in Bezug auf die ringförmigen Verbindungsflächen (6, 8) oder in Bezug auf die Enden des Randumrisses verbunden ist/sind.

7. Lebensmittelprodukt nach Anspruch 6, **dadurch gekennzeichnet, dass** mindestens eine der beiden Halbschalen (2, 4) durch Schneiden aus einem Waffelzwischenprodukt erhalten wird, das eine Vielzahl von miteinander durch mindestens eine Verbindungswand (24, 26) verbundenen Halbschalen umfasst, welche sich von der Seitenwand jeder Halbschale (2, 4) erstreckt und mit den Halbschalen in einer abgesenkten Position in Bezug auf die ringförmige Verbindungsfläche verbunden ist.

8. Lebensmittelprodukt nach einem der Ansprüche 1 bis 4, **dadurch gekennzeichnet, dass** mindestens eine der Halbschalen durch Schneiden aus einem Waffelzwischenprodukt erhalten wird, das eine Vielzahl von miteinander durch mindestens eine Verbindungswand (26, 26a) verbundene Halbschalen umfasst, die eine mit den Verbindungsflächen (6a, 8a) bündige oder dazu benachbarte Oberfläche aufweist, wobei der Schnitt unter einem rechten Winkel zur Ebene der Verbindungswand durchgeführt wird.

9. Lebensmittelprodukt nach einem der vorangehenden Ansprüche, umfassend eine Füllung flüssiger, cremiger oder teigiger Konsistenz.

10. Waffel mit einer Vielzahl von Halbschalen (2, 4), die mindestens durch eine Verbindungswand (24, 26) verbunden sind, **dadurch gekennzeichnet, dass** die Halbschalen ringförmige Randflächen aufweisen, die mit Lokalisiermitteln (10, 14; 12, 18; 6a, 8a) versehen sind, welche in der Lage sind, komplementär mit komplementären Halbschalen zusammenzupassen, wobei die Lokalisiermittel Gebilde (10, 14; 12, 18) umfassen, die so geformt sind, dass sie miteinander eingreifen können, oder sich verjüngende ringförmige Verbindungsflächen (6a, 8a) umfassen.

## Revendications

1. Produit alimentaire comprenant au moins deux moitiés de coquille (2, 4) de feuille de gaufrette, reliées l'une à l'autre bord à bord le long de surfaces appariées annulaires (6, 8) formant le contour de bord, **caractérisé en ce que** les surfaces appariées annulaires (6, 8) de chacune des deux moitiés de coquille (2, 4) comportent des moyens de positionnement (10, 14 ; 12, 18 ; 6a, 8a) complémentaires les uns des autres, lesdits moyens de positionnement comprenant des éléments (10, 14 ; 12, 18) façonnés de manière à pouvoir s'engager mutuellement, ou comprenant des surfaces appariées annulaires (6a, 8a) coniques.

2. Produit alimentaire selon la revendication 1, **caractérisé en ce que** lesdits moyens de positionnement comprennent des surfaces appariées annulaires (6, 8) ayant une section transversale en forme de dent, en U, en V, en L, en forme de crochet ou en zigzag.

3. Produit alimentaire selon la revendication 1, **caractérisé en ce que** lesdites surfaces appariées coniques (6a, 8a) sont des surfaces en forme de cône tronqué ou en forme de pyramide tronquée.

4. Produit alimentaire selon l'une quelconque des revendications 1 à 3, **caractérisé en ce que** lesdites surfaces appariées (6, 8) ont un fini de surface sensiblement lisse dépourvu de macropores ouverts.

5. Produit alimentaire selon l'une quelconque des revendications précédentes, **caractérisé en ce qu'**au moins l'une desdites moitiés de coquille (2, 4) comporte une paroi ayant une zone poreuse continue ou discontinue (30) s'étendant autour du périmètre, abaissée par rapport auxdites surfaces appariées annulaires (6, 8) ou par rapport aux extrémités du contour de bord.

6. Produit alimentaire selon la revendication 5, **caractérisé en ce que** ladite zone poreuse (30) est la surface résultant de la découpe d'une ou de plusieurs parois radiales (24, 24a) reliées à la paroi latérale de la moitié de coquille dans une position abaissée par rapport auxdites surfaces appariées annulaires (6, 8) ou par rapport aux extrémités du contour de bord.

7. Produit alimentaire selon la revendication 6, **caractérisé en ce qu'**au moins l'une des deux moitiés de coquille (2, 4) est obtenue par découpe dans une feuille de gaufrette intermédiaire comprenant une pluralité de moitiés de coquille reliées l'une à l'autre par au moins une paroi d'interconnexion (24, 26) s'étendant depuis la paroi latérale de chaque moitié de coquille (2, 4) et reliée aux moitiés de coquille dans une position abaissée par rapport à la surface appariée annulaire.

8. Produit alimentaire selon l'une quelconque des revendications 1 à 4, **caractérisé en ce qu'**au moins l'une desdites moitiés de coquille peut être obtenue par découpe dans une feuille de gaufrette intermédiaire comprenant une pluralité de moitiés de coquille reliées l'une à l'autre par au moins une paroi d'interconnexion (26, 26a) ayant une surface de niveau avec les, ou adjacente aux, dites surfaces appariées (6a, 8a), la découpe étant réalisée à angle droit par rapport au plan de la paroi d'interconnexion.

9. Produit alimentaire selon l'une quelconque des revendications précédentes, comprenant un fourrage ayant une consistance liquide, crémeuse ou pâteuse.

10. Feuille de gaufrette comprenant une pluralité de moitiés de coquille (2, 4) mutuellement reliées par au moins une paroi d'interconnexion (24, 26), **caractérisée en ce que** lesdites moitiés de coquille comportent des surfaces de bord annulaires pourvues de moyens de positionnement (10, 14 ; 12, 18 ; 6a, 8a) pouvant s'apparier de façon complémentaire avec les moitiés de coquille complémentaires, lesdits moyens de positionnement comprenant des éléments (10, 14 ; 12, 18) façonnés de manière à pouvoir s'engager mutuellement, ou comprenant des surfaces appariées annulaires (6a, 8a) coniques.
